(19) Europäisches Patentamt
European Patent Office
Office européen des brevets

(11) EP 4 725 588 A1

(12) EUROPEAN PATENT APPLICATION
published in accordance with Art. 153(4) EPC

(43) Date of publication:
15.04.2026 Bulletin 2026/16

(21) Application number: 24836075.2

(22) Date of filing: 03.07.2024

(51) International Patent Classification (IPC):
B01D 53/56 (2006.01)     B01D 53/14 (2006.01)
B01D 53/62 (2006.01)     B01D 53/82 (2006.01)

(52) Cooperative Patent Classification (CPC):
B01D 53/14; B01D 53/56; B01D 53/62; B01D 53/82

(86) International application number:
PCT/JP2024/024103

(87) International publication number:
WO 2025/009562 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2023 JP 2023110830

(71) Applicant: KAWASAKI JUKOGYO KABUSHIKI
KAISHA
Kobe-shi, Hyogo 650-8670 (JP)

(72) Inventors:
• NUMAGUCHI, Ryohei
  Hyogo 650-8670 (JP)
• OKUMURA, Takeshi
  Hyogo 650-8670 (JP)
• NISHIBE, Shohei
  Hyogo 650-8670 (JP)
• YAMAGUCHI, Takahiro
  Hyogo 650-8670 (JP)
• NARIAI, Toshifumi
  Hyogo 650-8670 (JP)
• HARA, Yutaro
  Hyogo 650-8670 (JP)

(74) Representative: Arnold & Siedsma
Bezuidenhoutseweg 57
2594 AC The Hague (NL)

(54) ACIDIC-GAS SEPARATION/RECOVERY SYSTEM AND ACIDIC-GAS SEPARATION/RECOVERY METHOD

(57) An acidic-gas separation/recovery system includes: NOx removal equipment that removes NOx in a discharge gas; and carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, and an NOx concentration in the gas to be treated that is supplied from the NOx removal equipment to the carbon-dioxide separation/recovery equipment is 63.7 ppm or less.

FIG.1

## Description

## Technical Field

The present disclosure relates to an acidic-gas separation/recovery system and an acidic-gas separation/recovery method with use of a solid absorbent in which an amine is supported on a porous base.

## Background Art

Separation/recovery of acidic gases, particularly carbon dioxide, from discharge gases from combustion equipment such as thermal power plants, blast furnaces in steel mills, and boilers is an important technique as a global warming countermeasure. Thus, currently, an amine absorbing liquid method for absorbing carbon dioxide contained in discharge gas has been put into practical use. In recent years, a carbon-dioxide separation/recovery process with the use of a solid absorbent in which an amine is supported on a porous base (a solid absorbent in which an amine solution is applied to a pore surface of a porous base, hereinafter, also simply referred to as a "solid absorbent") has been attracting attention as a further next-generation technique. In accordance with the carbon-dioxide separation/recovery process in which the solid absorbent is used, carbon dioxide can be desorbed by using low-temperature exhaust heat (low-temperature thermal energy at 100°C or lower, which is unavoidably generated from various manufacturing industries, power plants, and the like, and generally not effectively usable, or the like). Thus, carbon dioxide can be efficiently separated and recovered at low cost and with energy saving.

On the other hand, in general, discharge gas from combustion equipment can be released to the atmosphere after the concentration of acidic gas such as NOx (nitrogen oxide), SOx (sulfur oxide), and HCl is removed to be equal to or less than the standard value, so as to satisfy the emission standards. For example, according to the Ministry of the Environment, the emission standard value of NOx discharged from a waste incinerator (an incinerator with the amount of discharge gas being 40,000 $Nm^3$/h or more) is set to 250 ppm. In addition, the emission standard value of NOx for a coal combustion boiler (a boiler of 200,000 $m^3$N or more) is set to 200 ppm to 250 ppm. As described above, the emission concentration of NOx is permitted to have a value in excess of approximately 100 ppm.

NOx is known to produce nitrosamine, which is a highly carcinogenic substance, by reacting with amine (see Non-Patent Literature 1). In Japan, no regulation has been formulated on the exposure concentration of nitrosamine, but for example, in Germany, the regulation has been provided already on the exposure concentration of nitrosamine in the work environment. The upper limit of the exposure concentration of nitrosamine in the work environment in Germany is provided as 1 $\mu$g/$m^3$. Accordingly, it is naturally assumed that the exposure concentration will be also regulated in Japan in the future in consideration of environment.

In this regard, in the case of absorbing carbon dioxide in discharge gas by the amine absorbing liquid method, NOx in the discharge gas is absorbed into a large amount of water as a solvent, strong acids (nitric acid and nitrous acid) are produced, and the strong acids react with the amine more preferentially than carbon dioxide (weak acid). As a result, the amine in the absorbing liquid is oxidized, and the generated nitrosamine dissolves into the absorbing liquid. Thereafter, the generated nitrosamine is carried with mist generated in the operation of the equipment or volatilized from the absorbing liquid, and thereby easily discharged to the outside of the system, and finally, there is a possibility of contaminating the surrounding environment.

Patent Literature 1 discloses a discharge gas treatment apparatus in which a denitration apparatus or the like is further installed as a pretreatment apparatus of a carbon dioxide recovery apparatus, for suppressing deterioration of a carbon dioxide absorbing liquid (amine absorbing liquid). Such a discharge gas treatment apparatus is assumed to be capable of not suppressing only the deterioration of the amine absorbing liquid, but also suppressing the discharge of the nitrosamine to the outside of the system.

## Citation List

### Patent Literature

Patent Literature 1: Japanese Patent Application Laid-Open No. 2013-121562

### Non Patent Literature

Non-Patent Literature 1: Aoyama Mitsunori, "N-nitrosamine (regulation by TRGS 552 and response thereto)", Journal of Japan Rubber Association, Vol. 83, No. 8, 2010, p. 25 to 28

## Summary of Invention

An object of the present disclosure is to provide acidic-gas separation/recovery system and method capable of separating and recovering carbon dioxide, which can reduce the amount of nitrosamine diffused to the ground and is suitable in terms of environment.

An acidic-gas separation/recovery system according to a first aspect of the present disclosure includes:

NOx removal equipment that removes NOx in a discharge gas; and
carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, and
an NOx concentration in the gas to be treated that is supplied from the NOx removal equipment to the carbon-dioxide separation/recovery equipment is 63.7 ppm or less.

Alternatively, an acidic-gas separation/recovery system according to the first aspect of the present disclosure includes:

NOx removal equipment that removes NOx in a discharge gas; and
carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, and
an NOx concentration in the gas to be treated that is supplied from the NOx removal equipment to the carbon-dioxide separation/recovery equipment is set to equal to or less than a concentration capable of maintaining a value at which a maximum landing concentration of nitrosamine after diffusion of the discharge gas discharged from the carbon-dioxide separation/recovery equipment is equal to or less than a preset regulation value.

An acidic-gas separation/recovery method according to a second aspect of the present disclosure includes:

removing NOx in a discharge gas; and
adsorbing and desorbing carbon dioxide contained in a gas to be treated after the NOx removal by using a solid absorbent in which an amine is supported on a porous base, thereby separating and recovering the carbon dioxide, and
an NOx concentration in the gas to be treated after the NOx removal is 63.7 ppm or less.

Alternatively, an acidic-gas separation/recovery method according to the second aspect of the present disclosure includes:

removing NOx in a discharge gas; and
adsorbing and desorbing carbon dioxide contained in a gas to be treated after the NOx removal by using a solid absorbent in which an amine is supported on a porous base, thereby separating and recovering the carbon dioxide, and
an NOx concentration in the gas to be treated after the NOx removal is set to equal to or less than a concentration capable of maintaining a value at which a maximum landing concentration of nitrosamine after diffusion of the discharge gas discharged from the separation and recovery of the carbon dioxide is equal to or less than a preset regulation value.

## Advantageous Effects of Invention

The present disclosure can provide acidic-gas separation/recovery system and method capable of separating and recovering carbon dioxide, which can reduce the amount of nitrosamine diffused to the ground and is suitable in terms of environment.

## Brief Description of Drawings

FIG. 1 is a schematic diagram of an acidic-gas separation/recovery system according to Embodiment 1.
FIG. 2 is a schematic diagram of a configuration example of a carbon-dioxide separation/recovery equipment according to Embodiment 1.

FIG. 3 is a schematic diagram of another configuration example of the carbon-dioxide separation/recovery equipment according to Embodiment 1.

FIG. 4 is a schematic diagram of an acidic-gas separation/recovery system according to Embodiment 2.

FIG. 5 is a schematic diagram for explaining a mechanism for collecting trace amounts of components in a gas by a solid phase extraction method according to an example.

FIG. 6 is a schematic diagram for explaining a mechanism for collecting trace amounts of components in a gas by a liquid phase extraction method according to an example.

FIG. 7 is a graph showing vapor pressure curves of diethanolamine and NDEA according to an example.

FIG. 8 is a graph of a discharge concentration of nitrosamine in the case of setting the NOx concentration to 10 ppm, 40 ppm, 63.7 ppm, or 150 ppm.

## Description of Embodiments

As described above, the discharge gas treatment device in which the denitration apparatus is further installed as a pretreatment apparatus for suppressing the deterioration of the amine absorbing liquid is assumed to be capable of also suppressing the discharge of the nitrosamine to the outside of the system (see Patent Literature 1). However, the carbon-dioxide separation/recovery process in which the solid absorbent is used is different from the process in which the amine absorbing liquid is used, in that the solid absorbent itself is low in water content. Thus, it is difficult to predict whether strong acids (nitric acid and nitrous acid) are produced or not and whether nitrosamine is generated by a reaction with the strong acids or not, with the same mechanism as such an amine absorbing liquid method as described above. In addition, there has been no report so far that nitrosamine is detected in discharged gas in a carbon-dioxide separation/recovery process in which a solid absorbent is used.

As will be described in detail in the subsequent example, the present inventors have verified whether a compound that has an influence on the surrounding environment is discharged or not in gas discharged from carbon-dioxide separation/recovery equipment in which a solid absorbent is used. As a result, it has been detected and identified that two types of nitrosamines are generated in accordance with an unclear mechanism and included in the discharge gas.

On the other hand, in the case of operating, in an actual plant, a carbon-dioxide separation/recovery equipment in which a solid absorbent is used, discharge gas in which not only carbon dioxide and NOx but also oxygen and various other gases are mixed is supplied into the equipment. Accordingly, the solid absorbent used for a long period of time is deteriorated by oxidation and the like, the solid absorbent needs to be repaired or replaced every certain period of time. In general, the repair/replacement period of the solid absorbent varies depending on the type of combustion equipment in a plant provided with the carbon-dioxide separation/recovery equipment. However, it is preferable that the amount of nitrosamine diffused to the ground can be reduced down to a small amount for an approximate average regular repair period of the carbon-dioxide separation/recovery equipment in which the solid absorbent is used. It is to be noted that the approximate average regular repair period of the carbon-dioxide separation/recovery equipment in which the solid absorbent is used is specifically about 1 year, and the operating period thereof is about 8000 hours, whereas the remaining period is an inspection period.

Accordingly, the present disclosure can provide acidic-gas separation/recovery system and method capable of separating and recovering carbon dioxide, which can reduce the amount of nitrosamine diffused to the ground and is suitable in terms of environment.

In the present specification, the "discharge gas" is not particularly limited as long as the discharge gas is a gas containing carbon dioxide and NOx. Examples of such a gas include: a gas discharged from combustion equipment such as a thermal power plant in which coal, heavy oil, natural gas, or the like is used as a fuel, a blast furnace in a steel mill in which iron oxide is reduced with coke, a converter in a steel mill in which carbon in pig iron is burned to produce steel, and boilers in various manufacturing plants; and a gas discharged from transportation equipment such as an automobile, a ship, or an aircraft in which gasoline, heavy oil, light oil, or the like is used as a fuel.

In the present specification, "NOx" means an oxide of nitrogen, which is generated when a substance burns at a high temperature, and examples of the oxide include NO, $NO_2$, $N_2O$, and $N_2O_3$.

In the present specification, the "gas to be treated" means a gas obtained after removing at least some or all of NOx from the discharge gas, with the NOx concentration in the gas to be treated being 63.7 ppm or less, such that the gas is to be treated in a carbon-dioxide separation/recovery process in which the solid absorbent is used. The carbon dioxide content and the temperature in the gas to be treated are not particularly limited, as long as the gas to be treated is capable of absorbing carbon dioxide when the gas to be treated comes into contact with the solid absorbent. For example, the carbon dioxide partial pressure may be 1 kPa or more, and the temperature may be 20°C to 60°C.

In the present specification, the "discharge gas" means a gas that can contain a trace amount of nitrosamine, with the gas being discharged from a discharge line (such as a chimney or a flue) of carbon-dioxide separation/recovery equipment after adsorption and desorption of carbon dioxide contained in the gas to be treated. The discharge gas then diffuses into the atmosphere and reaches the ground.

Hereinafter, embodiments of the present disclosure will be described in detail with reference to the drawings. It is to be noted that the scope of the present disclosure is not limited to the embodiments described herein, and various modifications can be made without departing from the spirit of the present disclosure.

1. Acidic-Gas Separation/Recovery System

Embodiments of an acidic-gas separation/recovery system according to a first aspect of the present disclosure will be described below.

(Embodiment 1)

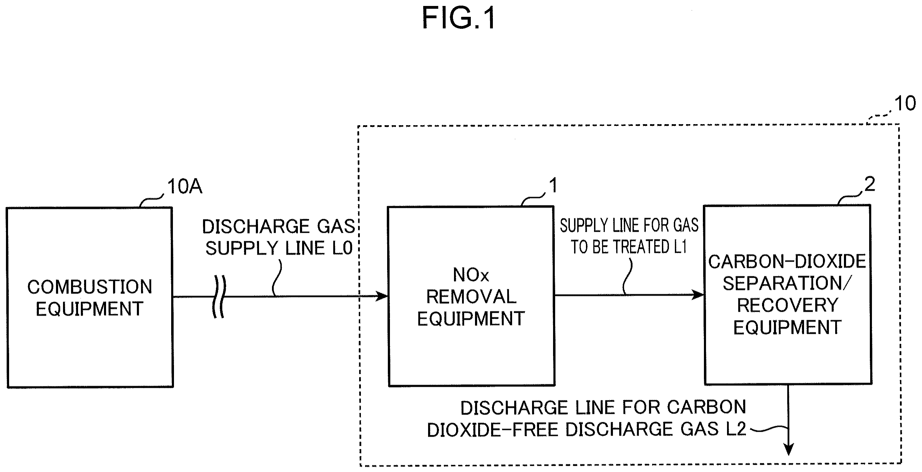

FIG. 1 shows a schematic diagram of an acidic-gas separation/recovery system according to Embodiment 1. As shown in FIG. 1, an acidic-gas separation/recovery system 10 includes: NOx removal equipment 1; and carbon-dioxide separation/recovery equipment 2 that adsorbs and desorbs carbon dioxide by using a solid absorbent.

As shown in FIG. 1, the NOx removal equipment 1 removes NOx in a discharge gas emitted from combustion equipment 10A such as a power plant, a blast furnace, and a boiler. The discharge gas is supplied from the combustion equipment 10A to the NOx removal equipment 1 through a discharge gas supply line L0.

The NOx removal equipment 1 reduces the NOx concentration in a gas to be treated, supplied to the carbon-dioxide separation/recovery equipment 2 installed downstream from the NOx removal equipment 1, down to 63.7 ppm or less. When the NOx concentration in the gas to be treated is 63.7 ppm or less, the amount of nitrosamine diffused from the carbon-dioxide separation/recovery equipment 2 described later to the ground can be reduced down to an extremely small amount for an approximate average regular repair period of the carbon-dioxide separation/recovery equipment (specifically, about 1 year (about 8000 hours as the operating period)). Specifically, the maximum landing concentration of nitrosamine on the ground after diffusion (hereinafter, also simply referred to as a "maximum landing concentration of nitrosamine") can be reduced to 1 $\mu$g/m$^3$ or less (0.167 ppb or less in molar composition of N-nitrosodiethanolamine). Further, a method for calculating the upper limit value 63.7 ppm of the NOx concentration in the gas to be treated will be described in detail in the subsequent example.

The NOx concentration in the gas to be treated, supplied to the carbon-dioxide separation/recovery equipment 2, is preferably 60 ppm or less, more preferably 55 ppm or less, still more preferably 50 ppm or less, particularly preferably 47 ppm or less, even more preferably 45 ppm or less, for more strictly examining the risk due to the diffusion of nitrosamine to the ground. In addition, as will be described in detail in the subsequent example, the NOx concentration is a concentration on the assumption that the nitrosamine diffused to the ground is N-nitrosodiethanolamine (hereinafter, also referred to as "NDEA"). The volatility of the nitrosamine varies depending on the type thereof. Accordingly, the maximum value of the allowable NOx concentration in such a gas to be treated may be appropriately adjusted depending on the volatility of the nitrosamine generated. Furthermore, the replacement period of the solid absorbent varies depending on the type of the combustion equipment for which the carbon-dioxide separation/recovery equipment is provided. Accordingly, the maximum value of the allowable NOx concentration in such a gas to be treated can be also appropriately adjusted depending on the type of the combustion equipment.

In the present specification, the "NOx concentration (in the gas)" is defined as a concentration of nitrogen oxide in the air, which is measured with an automatic measuring instrument based on a chemiluminescence method, specified in "Automatic Measuring Instrument for Nitrogen Oxide in Air" of JIS B 7953:2004.

Such NOx removal equipment 1 is not particularly limited as long as the NOx removal equipment 1 is any denitration equipment known to those skilled in the art. For example, the NOx removal equipment 1 may be equipment that removes NOx in the discharge gas by using a solid absorbent in which an amine is supported on a porous base, similarly to the carbon-dioxide separation/recovery equipment 2 described later. When the NOx removal equipment 1 is such equipment in which a solid absorbent is used, the NOx concentration in the gas to be treated can be easily lowered to such an extremely low concentration as described above.

Furthermore, in such a case, the type of the amine for use in the solid absorbent of the carbon-dioxide separation/recovery equipment 2 described later is preferably the same as the type of the amine for use in the solid absorbent of the NOx removal equipment 1. The use of the same type of amine allows a different type of amine from the amine for use in the carbon-dioxide separation/recovery equipment 2 to be prevented from entering the NOx removal equipment 1 and having any influence on the adsorption and desorption of carbon dioxide.

In addition, the solid absorbent for use in the NOx removal equipment 1 more preferably includes the solid absorbent used for adsorbing and desorbing carbon dioxide in the carbon-dioxide separation/recovery equipment 2 described later. More specifically, some or all of a solid absorbent already used for a certain period of time in the carbon-dioxide separation/recovery equipment 2 described later is preferably reused as the solid absorbent of the NOx removal equipment 1. NOx has stronger binding to amines than carbon dioxide. Accordingly, a sufficient amount of NOx can be removed even in the case of using a solid absorbent already used for a certain period of time (for example, about one year to three years, which is a general replacement period) for carbon-dioxide separation/recovery. As described above, the reuse of the solid absorbent in the NOx removal equipment 1 allows the acidic-gas separation/recovery system 10, which is suitable in terms of environment, to be achieved at low cost.

Alternatively, the NOx removal equipment 1 may be a common denitration apparatus to which any method known to those skilled in the art is applied. Examples of such NOx removal equipment 1 include a denitration apparatus to which an ammonia selective catalytic reduction method, a flue gas denitration method, a non-catalyst selective reduction method, or the like is applied.

As shown in FIG. 1, the carbon-dioxide separation/recovery equipment 2 is installed downstream along a gas flow from the NOx removal equipment 1, and the gas to be treated is supplied from the NOx removal equipment 1 through a supply line for gas to be treated L1. Thereafter, carbon dioxide in the gas to be treated is separated and recovered by the carbon-dioxide separation/recovery equipment 2. The discharge gas after the separation and the recovery is discharged as a carbon-dioxide-free discharge gas through a discharge line for carbon-dioxide-free discharge gas L2. At the same time, carbon dioxide in the gas to be treated is recovered (not shown).

The carbon-dioxide separation/recovery equipment 2 may have any configuration as long as the equipment is capable of adsorbing and desorbing carbon dioxide contained in the gas to be treated by using a solid absorbent in which an amine is supported on a porous base.

The configuration of such a carbon-dioxide separation/recovery equipment 2 is not particularly limited, and examples thereof include the following configurations.

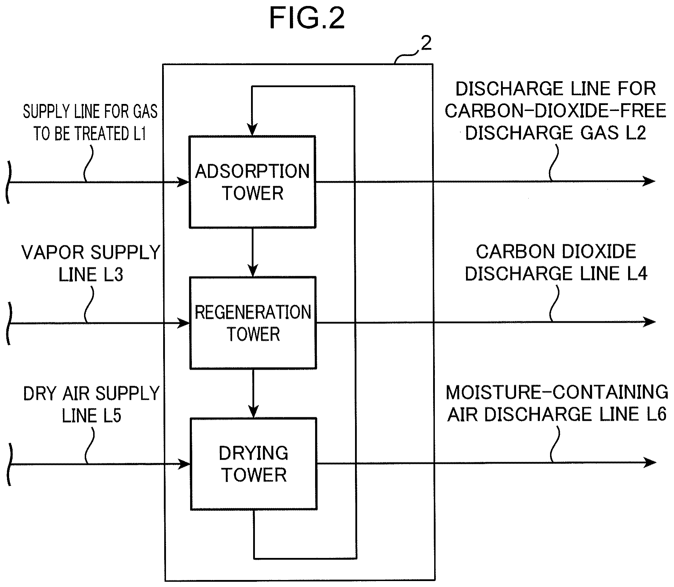

FIG. 2 shows a schematic diagram of a configuration example of a carbon-dioxide separation/recovery equipment according to Embodiment 1. The carbon-dioxide separation/recovery equipment 2 in FIG. 2 is moving bed type carbon-dioxide separation/recovery equipment 2 in which a solid absorbent is transferred to an adsorption tower, a regeneration tower, and a drying tower in this order. The solid adsorbent is returned from the drying tower to the adsorption tower by a conveyor or the like. It is to be noted that the configurations of the adsorption tower, regeneration tower, and drying tower may be appropriately changed from the configuration shown in FIG. 2.

In the adsorption tower, the gas to be treated, supplied through the supply line for gas to be treated L1, comes into contact with a solid absorbent filling the adsorption tower. As a result, carbon dioxide in the gas to be treated is adsorbed and removed onto the solid absorbent. Thus, the carbon-dioxide-free discharge gas with carbon dioxide removed therefrom is discharged from the adsorption tower through the discharge line for carbon-dioxide-free discharge gas L2. The solid absorbent with the carbon dioxide adsorbed thereon is transferred to the regeneration tower.

In the regeneration tower, the transferred solid absorbent with the carbon dioxide adsorbed thereon comes into contact with vapor supplied through a vapor supply line L3. The temperature of the steam is not particularly limited, and is, for example, 60°C or higher. As a result, the carbon dioxide is desorbed from the solid absorbent, and the carbon dioxide gas is discharged from the regeneration tower through a carbon dioxide discharge line L4. The solid absorbent with the vapor adhering thereto is transferred to the drying tower.

In the drying tower, the transferred solid absorbent with the vapor adhering thereto comes into contact with dry air supplied through a dry air supply line L5. As a result, moisture and the like adhering to the solid absorbent are evaporated, and water vapor, dry gas, and the like derived from the evaporation are discharged through a moisture-containing air discharge line L6. The dried solid absorbent is returned to the adsorption tower.

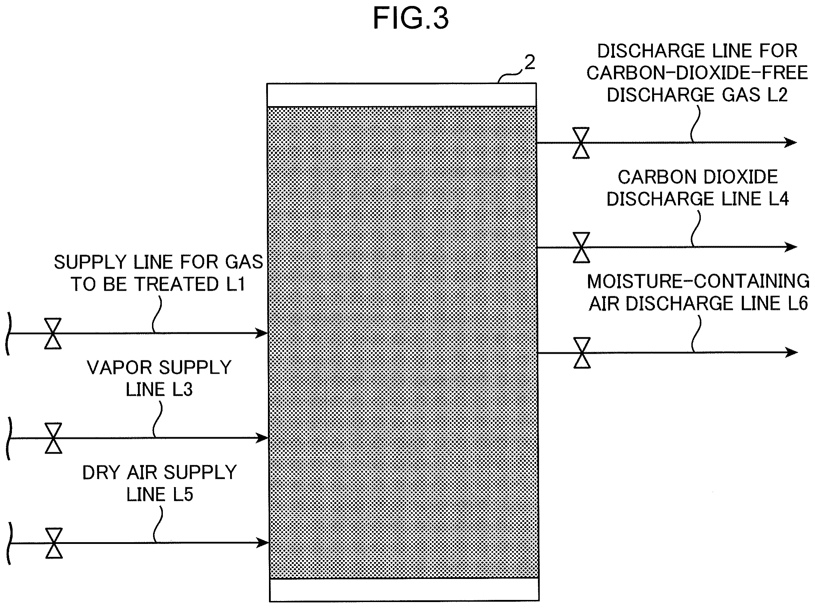

Further, FIG. 3 shows a schematic diagram of another configuration example of the carbon-dioxide separation/recovery equipment according to Embodiment 1. In the carbon-dioxide separation/recovery equipment 2 shown in FIG. 3, one tank filled with a solid absorbent functions as the adsorption tower, regeneration tower, and drying tower described above for each of an absorbing step, a regenerating step, and a drying step. Then, three steps of absorbing step, regenerating step, and drying step are periodically repeated. More specifically, the carbon-dioxide separation/recovery equipment 2 in FIG. 3 is fixed bed type carbon-dioxide separation/recovery equipment.

In the carbon-dioxide separation/recovery equipment 2 shown in FIG. 3, the number of tanks filled with the solid absorbent is one, but the number of tanks may be two or more. When the number of tanks is two or more, continuous treatment is possible.

As shown in FIG. 3, a supply line is configured such that a gas to be treated, vapor, and dry air can be supplied respectively from a supply line for gas to be treated L1, a vapor supply line L3, and a dry air supply line L5 to the tank of the carbon-dioxide separation/recovery equipment 2. Further, a discharge line is configured such that a carbon-dioxide-free discharge gas, carbon dioxide, and moisture-containing air can be discharged respectively from a discharge line for carbon-dioxide-free discharge gas L2, a carbon dioxide discharge line L4, and a moisture-containing air discharge line L6. Each of the supply line and the discharge line is, however, provided with on-off valves.

Specifically, in the absorbing step, the gas to be treated is supplied through the supply line for gas to be treated L1 to the tank, and comes into contact with the solid absorbent filling the tank. As a result, carbon dioxide in the gas to be treated is adsorbed onto the solid absorbent. Thus, the carbon-dioxide-free discharge gas with carbon dioxide removed therefrom is discharged through the discharge line for carbon-dioxide-free discharge gas L2. The on-off valves excluding those of the supply line for gas to be treated L1 and discharge line for carbon-dioxide-free discharge gas L2 are closed in the absorbing step.

Then, in the regenerating step, vapor is supplied through the vapor supply line L3, and comes into contact with the solid absorbent with the carbon dioxide adsorbed thereon. As a result, the carbon dioxide is desorbed from the solid absorbent by the heat of the vapor, and the carbon dioxide gas is discharged through the carbon dioxide discharge line L4 and then recovered. The on-off valves excluding those of the vapor supply line L3 and carbon dioxide discharge line L4 are closed in the regenerating step.

Finally, in the drying step, low-temperature dry air is supplied through the dry air supply line L5, and comes into contact with the solid absorbent with the vapor adhering thereto. As a result, moisture and the like adhering to the solid absorbent are evaporated, and dry air containing water vapor from the evaporation is discharged through the moisture-containing air discharge line L6. The on-off valves excluding those of the dry air supply line L5 and moisture-containing air discharge line L6 are closed in the drying step.

Next, the configuration of the solid absorbent in which the amine is supported on the porous base, for use in the carbon-dioxide separation/recovery equipment 2 will be briefly described below.

The type of the porous base is not particularly limited. For the porous base, a base made of any material known to those skilled in the art can be used, with the base being capable of supporting an amine described later, and having a large number of pores capable of adsorbing and desorbing carbon dioxide.

Specific examples of the porous base include silica such as silica gel or mesoporous silica, alumina such as active alumina, zeolite, titania, zirconia, magnesia, activated carbon, and a metal organic framework (MOF). When these materials have powder forms, the materials may be granulated appropriately with the use of a binder, and used as a porous base.

The type of amine is also not particularly limited, and amines and polyamines that can be supported on any porous base known to those skilled in the art and are capable of adsorbing and desorbing carbon dioxide can be used. Examples of the type of the amine include a monoethanolamine, a diethanolamine, a triethanolamine, a polyethyleneimine, an ethylenediamine, a diethylenetriamine, a triethylenetetramine, a tetraethylenepentamine, and a pentaethylenehexamine. For the amine, one type of amine may be used, or two or more types of amines may be used in combination.

The method for producing the solid absorbent is not particularly limited, but for example, the solid absorbent can be produced by the following method.

First, the amine described above is dissolved in a solvent to prepare an amine absorbent solution. The concentration of the amine in the amine absorbent solution is not particularly limited, but may be adjusted to have an appropriate value in the range of 5% by mass or more and 70% by mass or less depending on the type of amine to be used.

Next, the porous base (for example, the porous particles described above) is put into the immersion container filled with the amine absorbent solution to impregnate the porous base with the amine absorbent solution. The immersion time is not particularly limited, as long as the inside of the pores is sufficiently degassed. For example, the immersion time can be 24 hours.

Thereafter, the porous base is pulled up from the amine absorbent solution, and the adhering excess liquid is removed by a method such as suction filtration. Thereafter, the porous base is air-dried or dried under reduced pressure at a temperature that is close to room temperature, thereby allowing a solid absorbent material to be obtained.

As described above, in the acidic-gas separation/recovery system 10 according to Embodiment 1, the NOx concentration in the gas to be treated is 63.7 ppm or less. Thus, the amount of nitrosamine produced by the reaction between NOx and the amine in the carbon-dioxide separation/recovery equipment 2 can be reduced down to a small amount for an approximate average regular repair period of the carbon-dioxide separation/recovery equipment (specifically, about 1 year (about 8000 hours as the operating period)). Accordingly, the acidic-gas separation/recovery system 10 can reduce the amount of nitrosamine diffused to the ground down to an extremely small amount (specifically, the maximum landing concentration of nitrosamine can be reduced to 1 $\mu g/m^3$ or less), and thus, is suitable in terms of environment, and can efficiently separate and recover carbon dioxide.

In addition, the carbon-dioxide separation/recovery method in which the solid absorbent is used can, as compared with the method in which an amine absorbing liquid is used, desorb carbon dioxide from the solid absorbent with the use of exhaust heat, which is generally not effectively usable. Thus, also from this viewpoint, the method is suitable in terms of environment.

Additionally, with the NOx removal equipment 1 installed upstream along a gas flow from the carbon-dioxide separation/recovery equipment 2 according to Embodiment 1, SOx, HCl, HF, and the like besides NOx are sufficiently assumed to be removed at the same time. It is hard to say that SOx, HCl, HF, and the like, similarly to NOx, also have no possibility of reacting with an amine supported on the solid absorbent and then generating other harmful substances. Accordingly, the acidic-gas separation/recovery system 10 according to Embodiment 1 is highly likely to contribute to reducing the generation of such harmful substances.

(Embodiment 2)

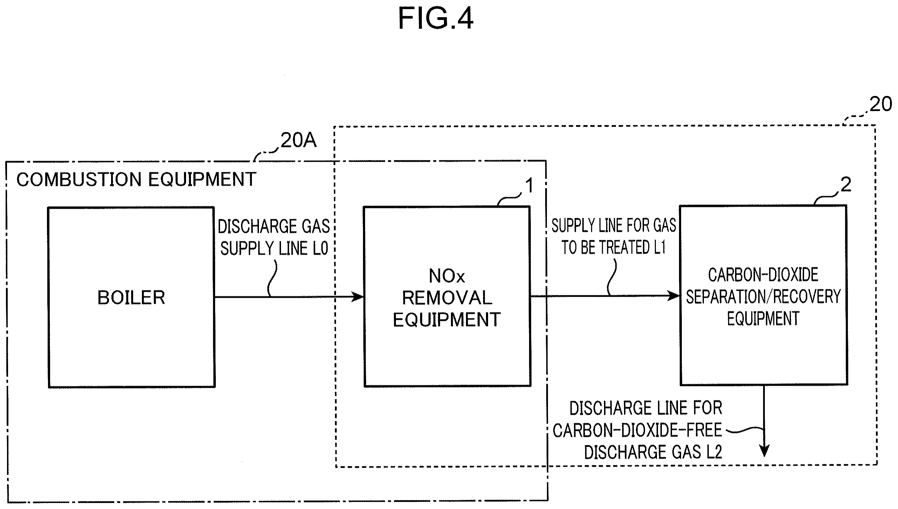

FIG. 4 shows a schematic diagram of an acidic-gas separation/recovery system according to Embodiment 2. As shown in FIG. 4, an acidic-gas separation/recovery system 20 includes: NOx removal equipment 1 installed in combustion equipment 20A; and carbon-dioxide separation/recovery equipment 2 that adsorbs and desorbs carbon dioxide by using a solid absorbent.

In Embodiment 1 described above, the acidic-gas separation/recovery system 10 in which the NOx removal equipment 1 is installed downstream along a gas flow from the combustion equipment 10A and upstream along a gas flow from the carbon-dioxide separation/recovery equipment 2 has been described.

In contrast, as shown in FIG. 4, the acidic-gas separation/recovery system 20 according to Embodiment 2 is different from the acidic-gas separation/recovery system 10 according to Embodiment 1 described above in that a denitration apparatus already installed in the common combustion equipment 20A such as a power plant, a blast furnace, or a boiler has the same function as the NOx removal equipment 1 described above. In other words, the acidic-gas separation/recovery system 20 is configured such that the NOx concentration in a gas to be treated, supplied to the carbon-dioxide separation/recovery equipment 2, is 63.7 ppm or less, by enhancing the denitration action of a denitration apparatus or the like already installed in the common combustion equipment 20A.

The detailed configurations and functions of the NOx removal equipment 1, carbon-dioxide separation/recovery equipment 2, and respective supply lines are similar to those according to Embodiment 1 described above.

Similarly to Embodiment 1 described above, the acidic-gas separation/recovery system 20 according to Embodiment 2 can also reduce the amount of nitrosamine produced by the reaction between NOx and the amine in the carbon-dioxide separation/recovery equipment 2, down to a small amount for an approximate average regular repair period of the carbon-dioxide separation/recovery equipment (specifically, about 1 year (about 8000 hours as the operating period)). Accordingly, the acidic-gas separation/recovery system 20 can also reduce the amount of nitrosamine diffused to the ground down to an extremely small amount (specifically, the maximum landing concentration of nitrosamine can be reduced to 1 $\mu g/m^3$ or less), and thus, is suitable in terms of environment, and efficiently separating and recovering carbon dioxide.

(Modification Example of Acidic-Gas Separation/Recovery System)

A modification example of the acidic-gas separation/recovery system according to the first aspect of the present disclosure includes: NOx removal equipment; and carbon-dioxide separation/recovery equipment that adsorbs and desorbs carbon dioxide by using a solid absorbent, similarly to the acidic-gas separation/recovery system according to Embodiment 1 or 2 described above. Details of the configurations of the NOx removal equipment and carbon-dioxide separation/recovery equipment are similar to those according to Embodiment 1 or 2 described above.

While the NOx concentration in the gas to be treated is 63.7 ppm or less according to Embodiment 1 or 2 described above, the present modification example is different in that the NOx concentration in the gas is set to equal to or less than a specific concentration. The specific concentration is a concentration capable of maintaining a value at which the maximum landing concentration of nitrosamine after diffusion of the discharge gas discharged from the carbon-dioxide separation/recovery equipment is equal to or less than a preset regulation value. The period of time during which such a value is maintained is preferably a regular repair period of the carbon-dioxide separation/recovery equipment.

In the present specification, the "maximum landing concentration of nitrosamine (on the ground) after diffusion" means, as described in detail in the subsequent example, the concentration of nitrosamine at the ground point estimated to have the smallest dilution ratio calculated from the respective numerical values of: the amount of discharge gas; gas temperature; chimney height; atmospheric stability; effective chimney height; and diffusion parameters composed of evaluation time, P-G diagram evaluation time, and exponent of horizontal diffusion width, when a plant such as any coal-fired power plant is employed as a model case. Furthermore, in the present specification, the largest concentration among concentrations estimated by the weak wind puff equation, the puff equation, and the plume equation is employed as the maximum landing concentration of nitrosamine.

In the present specification, the "preset regulation value" may be arbitrarily set depending on the surrounding work environment on the ground. For example, in a place where there is a valuable nature environment around, a place where many people live around, or the like, the regulation value may be rather set as low as possible. In addition, for example, the regulation value may be set to a normal value in a place where there is almost no nature around, a place where few people live around, or the like.

The acidic-gas separation/recovery system according to the present modification example allows the amount of nitrosamine diffused to the ground to be reduced down to an amount that is suitable for the surrounding environment, the system is suitable in terms of the environment, and the system can efficiently separate and recover carbon dioxide.

Further, according to the present modification example, the NOx concentration in the gas to be treated may be set equal to or less than a concentration at which the maximum landing concentration of nitrosamine can be maintained at 1

$\mu g/m^3$ or less (or 0.167 ppb or less in molar composition of NDEA) until the operating time of the carbon-dioxide separation/recovery equipment reaches 8000 hours. Such a configuration allows the amount of nitrosamine diffused to the ground to be reduced down to a very small amount, the configuration is suitable in terms of environment, and the configuration can efficiently separate and recover carbon dioxide.

2. Acidic-Gas Separation/Recovery Method

An embodiment of an acidic-gas separation/recovery method according to a second aspect of the present disclosure will be described below. The acidic-gas separation/recovery method according to the present embodiment includes removing NOx and separating and recovering carbon dioxide.

In the removal of NOx, NOx in the discharge gas is removed to cause the NOx concentration in the gas to be treated after the removal of NOx to reach 63.7 ppm or less. A preferred upper limit of the NOx concentration in the gas to be treated is the same as the value mentioned for the acidic-gas separation/recovery system according to the first aspect. Further, the maximum value of the NOx concentration in such a gas to be treated can be appropriately adjusted, depending on the type of combustion equipment that emits the discharge gas to which the acidic-gas separation/recovery method according to the present embodiment is applied.

In the removal of NOx, NOx in the discharge gas is preferably removed by using a solid absorbent, similarly to the acidic-gas separation/recovery system according to the first aspect described above. In addition, the solid absorbent more preferably includes a solid absorbent used for adsorbing and desorbing carbon dioxide in separating and recovering carbon dioxide, similarly to the acidic-gas separation/recovery system according to the first aspect described above. Alternatively, any denitration equipment, apparatus, denitration method, or the like known to those skilled in the art may be applied in the removal of NOx, similarly to the acidic-gas separation/recovery system according to the first aspect described above.

In the separation and recovery of carbon dioxide, carbon dioxide contained in the gas to be treated is adsorbed and desorbed by using a solid absorbent in which an amine is supported on a porous base. Also in the separation and recovery of carbon dioxide, any equipment (for example, moving bed type or fixed bed type carbon-dioxide separation/recovery equipment), apparatus, method, or the like known to those skilled in the art, capable of adsorbing and desorbing carbon dioxide contained in the gas to be treated by using the solid absorbent, may be used, similarly to the acidic-gas separation/recovery system according to the first aspect described above.

As described above, the acidic-gas separation/recovery method according to the present embodiment can also reduce the amount of nitrosamine produced by the reaction between NOx and the amine in separating and recovering carbon dioxide, down to a small amount for an approximate average regular repair period of the carbon-dioxide separation/recovery equipment (specifically, about 1 year (about 8000 hours as the operating period)), similarly to the acidic-gas separation/recovery system according to the first aspect described above. Accordingly, the acidic-gas separation/recovery method according to the present embodiment can reduce the amount of nitrosamine diffused to the ground down to an extremely small amount (specifically, the maximum landing concentration of nitrosamine can be reduced to 1 $\mu g/m^3$ or less), and thus, is suitable in terms of environment, and efficiently separating and recovering carbon dioxide.

(Modification Example of Acidic-Gas Separation/Recovery Method)

A modification example of the acidic-gas separation/recovery method according to the second aspect of the present disclosure includes: removing NOx; and adsorbing and desorbing carbon dioxide contained in a gas to be treated after the NOx removal by using a solid absorbent, thereby separating and recovering the carbon dioxide, similarly to the acidic-gas separation/recovery method according to the embodiment described above. Details of the removal of NOx and the separation and recovery of carbon dioxide are similar to those according to the embodiment described above.

While the NOx concentration in the gas to be treated is 63.7 ppm or less according to the embodiment described above, the present modification example is different in that the NOx concentration in the gas is set to equal to or less than a specific concentration. The specific concentration is a concentration capable of maintaining a value at which the maximum landing concentration of nitrosamine after diffusion of the discharge gas discharged after the separation and recovery of carbon dioxide is equal to or less than a preset regulation value. The period of time during which such a value is maintained is preferably a regular repair period of equipment for use in the separation and recovery of carbon dioxide. The meanings of the "maximum landing concentration of nitrosamine after diffusion" and "preset regulation value" are as described above.

The acidic-gas separation/recovery method according to the present modification example allows the amount of nitrosamine diffused to the ground to be reduced down to an amount that is suitable for the surrounding environment, the system is suitable in terms of the environment, and the system can efficiently separate and recover carbon dioxide.

Further, according to the present modification example, the NOx concentration in the gas to be treated may be set equal to or less than a concentration at which the maximum landing concentration of nitrosamine can be maintained at 1

µg/m$^3$ or less (or 0.167 ppb or less in molar composition of NDEA) until the total time for separating and recovering carbon dioxide (that is, the operating time of the carbon-dioxide separation/recovery equipment or the like) reaches 8000 hours. Such a configuration allows the amount of nitrosamine diffused to the ground to be reduced down to a very small amount, the configuration is suitable in terms of environment, and the configuration can efficiently separate and recover carbon dioxide.

[Summary of Present Disclosure]

The specific embodiments described above include a disclosure including the following configurations.

An acidic-gas separation/recovery system according to a first aspect of the present disclosure includes:

NOx removal equipment that removes NOx in a discharge gas; and
carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, and
an NOx concentration in the gas to be treated that is supplied from the NOx removal equipment to the carbon-dioxide separation/recovery equipment is 63.7 ppm or less.

The acidic-gas separation/recovery system according to the first aspect can provide an acidic-gas separation/-recovery system capable of separating and recovering carbon dioxide, with the system being capable of reducing the amount of nitrosamine diffused to the ground and being suitable in terms of environment.

An acidic-gas separation/recovery system according to a second aspect of the present disclosure is the acidic-gas separation/recovery system according to the first aspect, in which the NOx removal equipment removes NOx in the discharge gas by using a solid absorbent in which an amine is supported on a porous base.

The acidic-gas separation/recovery system according to the second aspect allows the NOx concentration in the gas to be treated to be easily lowered to an extremely low concentration.

An acidic-gas separation/recovery system according to a third aspect of the present disclosure is the acidic-gas separation/recovery system according to the second aspect, in which the solid absorbent for use in the NOx removal equipment includes the solid absorbent used for adsorbing and desorbing carbon dioxide in the carbon-dioxide separation/recovery equipment.

The acidic-gas separation/recovery system according to the third aspect allows the solid absorbent to be reused, thus allowing an acidic-gas separation/recovery system, which is suitable in terms of environment, to be achieved at low cost.

An acidic-gas separation/recovery method according to a fourth aspect of the present disclosure includes:

removing NOx in a discharge gas; and
adsorbing and desorbing carbon dioxide contained in a gas to be treated after the NOx removal by using a solid absorbent in which an amine is supported on a porous base, thereby separating and recovering the carbon dioxide, and
an NOx concentration in the gas to be treated after the NOx removal is 63.7 ppm or less.

The acidic-gas separation/recovery method according to the fourth aspect can provide an acidic-gas separation/recovery method capable of separating and recovering carbon dioxide, with the method being capable of reducing the amount of nitrosamine diffused to the ground and being suitable in terms of environment.

An acidic-gas separation/recovery method according to a fifth aspect of the present disclosure is the acidic-gas separation/recovery method according to the fourth aspect, in which in the removal of NOx, NOx in the discharge gas is removed by using a solid absorbent in which an amine is supported on a porous base.

The acidic-gas separation/recovery method according to the fifth aspect allows the NOx concentration in the gas to be treated to be easily lowered to an extremely low concentration.

An acidic-gas separation/recovery method according to a sixth aspect of the present disclosure is the acidic-gas separation/recovery method according to the fifth aspect, in which the solid absorbent for use in the removal of NOx includes the solid absorbent used for adsorbing and desorbing carbon dioxide in separating and recovering the carbon dioxide.

The acidic-gas separation/recovery method according to the sixth aspect allows the solid absorbent to be reused, thus allowing an acidic-gas separation/recovery method, which is suitable in terms of environment, to be achieved at low cost.

An acidic-gas separation/recovery system according to a seventh aspect of the present disclosure includes:

NOx removal equipment that removes NOx in a discharge gas; and

carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, and

an NOx concentration in the gas to be treated that is supplied from the NOx removal equipment to the carbon-dioxide separation/recovery equipment is set to equal to or less than a concentration capable of maintaining a value at which a maximum landing concentration of nitrosamine after diffusion of the discharge gas discharged from the carbon-dioxide separation/recovery equipment is equal to or less than a preset regulation value.

The acidic-gas separation/recovery system according to the seventh aspect can provide an acidic-gas separation/recovery system capable of separating and recovering carbon dioxide, which can reduce the amount of nitrosamine diffused to the ground, down to an amount that is suitable for the surrounding environment, and is suitable in terms of environment.

An acidic-gas separation/recovery system according to an eighth aspect of the present disclosure is the acidic-gas separation/recovery system according to the seventh aspect, in which the NOx concentration in the gas to be treated is set to equal to or less than a concentration at which the maximum landing concentration of nitrosamine after diffusion of the discharge gas can be maintained at 1 $\mu g/m^3$ or less until an operating time of the carbon-dioxide separation/recovery equipment reaches 8000 hours.

The acidic-gas separation/recovery system according to the eighth aspect can provide an acidic-gas separation/recovery system capable of separating and recovering carbon dioxide, with the system being capable of reducing the amount of nitrosamine diffused to the ground and being suitable in terms of environment.

An acidic-gas separation/recovery method according to a ninth aspect of the present disclosure includes:

removing NOx in a discharge gas; and

adsorbing and desorbing carbon dioxide contained in a gas to be treated after the NOx removal by using a solid absorbent in which an amine is supported on a porous base, thereby separating and recovering the carbon dioxide, and

an NOx concentration in the gas to be treated after the NOx removal is set to equal to or less than a concentration capable of maintaining a value at which a maximum landing concentration of nitrosamine after diffusion of the discharge gas discharged from the separation and recovery of the carbon dioxide is equal to or less than a preset regulation value.

The acidic-gas separation/recovery method according to the ninth aspect can provide an acidic-gas separation/recovery method capable of separating and recovering carbon dioxide, with the method being capable of reducing the amount of nitrosamine diffused to the ground, down to an amount that is suitable for the surrounding environment, and being suitable in terms of environment.

An acidic-gas separation/recovery method according to a tenth aspect of the present disclosure is the acidic-gas separation/recovery method according to the ninth aspect, in which the NOx concentration in the gas to be treated is set to equal to or less than a concentration at which the maximum landing concentration of nitrosamine after diffusion of the discharge gas can be maintained at 1 $\mu g/m^3$ or less until a total time for separating and recovering carbon dioxide reaches 8000 hours.

The acidic-gas separation/recovery method according to the tenth aspect can provide an acidic-gas separation/recovery method capable of separating and recovering carbon dioxide, with the method being capable of reducing the amount of nitrosamine diffused to the ground and being suitable in terms of environment.

**Examples**

Hereinafter, the present disclosure will be described more specifically with reference to examples, but the present disclosure is not limited by the examples at all.

Whether a substance that affected the surrounding environment, particularly nitrosamine, was detected or not in the gas discharged from the carbon-dioxide separation/recovery equipment in which the solid absorbent was used was first verified in the present example. Next, based on the result, the upper limit of the NOx concentration (ppm) in the gas to be treated, supplied to the carbon-dioxide separation/recovery equipment, was calculated. The upper limit of the NOx concentration (ppm) is capable of reducing the amount of nitrosamine diffused to the ground, down to a small amount (specifically, the amount at which the maximum landing concentration of nitrosamine is 1 $\mu g/m^3$ or less), for an approximate average regular repair period of the carbon-dioxide separation/recovery equipment (specifically, about 1 year (about 8000 hours as the operation period)). Details will be described below.

1. Detection and Identification of Nitrosamine

The carbon-dioxide separation/recovery equipment and experimental discharge gas described below were used for detection of nitrosamine in the gas. Further, with the use of the equipment and the discharge gas, the nitrosamine was detected and identified by a method for collecting trace amounts of components in the gas discharged from the carbon-dioxide separation/recovery equipment described below and a method for detecting and identifying molecular species of the collected components. Additionally, the detected and identified nitrosamine was discussed.

(Carbon-Dioxide Separation/Recovery Equipment)

First, a fixed bed type carbon-dioxide separation/recovery equipment to which a steam-aided vacuum swing adsorption (SA-VSA) process was applied was used as a carbon-dioxide separation/recovery equipment in which a solid absorbent was used. In the SA-VSA process, low-temperature vapor is supplied in a desorbing step for the solid absorbent with carbon dioxide adsorbed thereon. This carbon-dioxide separation/recovery equipment has almost the same configuration as the configuration of the carbon-dioxide separation/recovery equipment 2 shown in FIG. 3 described above. However, the purpose of the present experiment is to investigate the influence of NOx in the discharge gas, and thus, no NOx removal equipment is provided upstream along a gas flow from the carbon-dioxide separation/recovery equipment. Accordingly, in the carbon-dioxide separation/recovery equipment used in this experiment, the supply line for gas to be treated L1 shown in FIG. 3 serves as a discharge gas supply line (L0). Specifically, in an absorbing step, the discharge gas is supplied to the tank through the discharge gas supply line (L0), and comes into contact with the solid absorbent filling the tank, and carbon dioxide in the discharge gas is adsorbed by the solid absorbent.
In addition, the solid absorbent filling the tank was produced by the following method. Specifically, first, silica gel of 1 mm to 5 mm in particle diameter as a porous base was immersed in an aqueous diethanolamine solution. The immersed silica gel was left at room temperature for 8 hours or longer. After the silica gel was left, the silica gel was taken out, the aqueous diethanolamine solution excessively adhering to the silica gel was separated, and a drying gas (a nitrogen gas at 40°C and 15 L/min) was caused to flow to cause the silica gel to be air-dried (see the method for producing a solid absorbent, described in Japanese Patent No. 6055134). It is to be noted that the condition after a lapse of two hours from the time point at which the gas temperature was stabilized at the outlet of the drying tank for drying the silica gel with the diethanolamine supported thereon was defined as a drying end condition for the silica gel (that is, the solid absorbent) with the diethanolamine supported thereon.

(Experimental Discharge Gas)

As the experimental discharge gas supplied through the discharge gas supply line, a simulated discharge gas obtained by mixing air and high-purity carbon dioxide was further mixed with 30 ppm of NOx, and used.

(Method for Collecting Trace Amount of Component in Gas Discharged from Carbon-Dioxide Separation/Recovery Equipment)

Two collecting mechanisms of: a mechanism for collecting trace amounts of components by a solid phase extraction method; and a mechanism for collecting trace amounts of components by a liquid phase extraction method were installed downstream along the gas flows from the three gas discharge ports of the discharge line for carbon-dioxide-free discharge gas L2, carbon dioxide discharge line L4, and moisture-containing air discharge line L6 in the carbon-dioxide separation/recovery equipment described above.

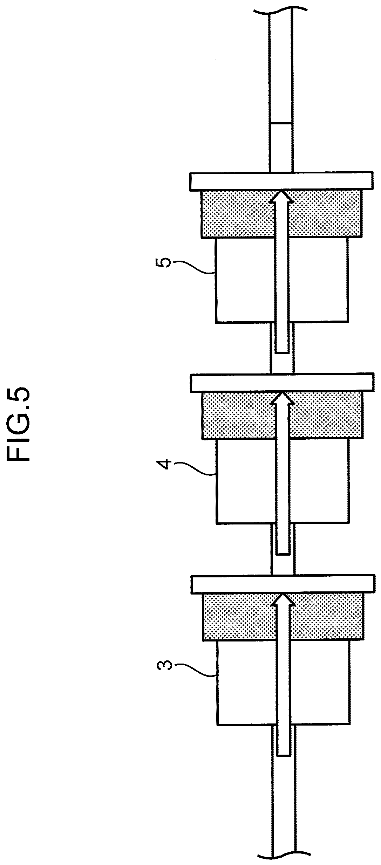

FIG. 5 shows a schematic diagram for explaining a mechanism for collecting trace amounts of components in a gas by a solid phase extraction method. As shown in FIG. 5, in the mechanism of collection by the solid phase extraction method, a first cartridge 3 filled with a copolymer, a second cartridge 4 filled with a strong cation exchange resin, and a third cartridge 5 filled with activated carbon were arranged in series, and the gases from the three gas discharge ports were caused to flow in the direction indicated by arrows in FIG. 5. Causing the gases from the three gas discharge ports to flow through the three cartridges allows trace amounts of components of all acidic, basic and neutral molecules in the gas to be sorbed and then collected. After the completion of causing the gases from the three gas discharge ports to flow through the three cartridges, methanol and dichloromethane were sequentially fed to the first cartridge 3 filled with the copolymer to obtain an extract in each fraction in which the trace amounts of components sorbed were dissolved. Similarly, an ethanol solution of 1% ammonia was fed to the second cartridge 4 filled with the strong cation exchange resin to obtain an extract. Similarly, methanol and dichloromethane were sequentially fed to the third cartridge 5 filled with the activated carbon to obtain an extract in each fraction. Although not shown in FIG. 5, an empty impinger was disposed further downstream along the gas flows from the three cartridges, and cooled to also obtain condensed water.

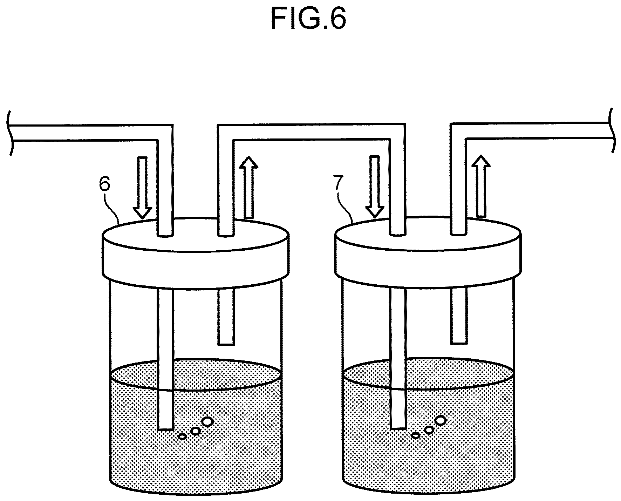

FIG. 6 shows a schematic diagram for explaining a mechanism for collecting trace amounts of components in a gas by a liquid phase extraction method. As shown in FIG. 6, in the mechanism of collection by the liquid phase extraction method, a first impinger 6 holding a 0.1% sulfamic acid solution was disposed in the upstream stage close to the gas flow from the gas discharge port. Further, a second impinger 7 holding ultrapure water was disposed in series with the first impinger 6 in the downstream stage far from the gas flow from the gas discharge port. Then, the gases from the three gas discharge ports were caused to flow through the first impinger 6 and the second impinger 7 arranged in series as described above in the directions indicated by arrows in FIG. 6 to collect trace amounts of components in the gases.

(Method for Detecting and Identifying Molecular Species of Collected Component)

The extraction and condensed water in each fraction, obtained by the solid phase extraction method, and each absorbing liquid and each impinger washing liquid obtained by the liquid phase extraction method were analyzed respectively by using LC-OrbitrapMS and GC-OrbitrapMS. Then, molecular species of the collected components were detected and identified from the analyzed mass spectra. As an example of the result of detecting and identifying the molecular species, the results of analyzing the gas from the gas discharge port in the regenerating step in the carbon-dioxide separation/recovery equipment are shown in Tables 1 to 2 (No. 1 to No. 10), Tables 3 to 4 (No. 11 to No. 20), and Tables 5 to 6 (No. 21 to No. 30) below. In Tables 1 to 6, "HLB" intends the first cartridge 3 filled with the copolymer, "MC-1" intends the second cartridge 4 filled with the strong cation exchange resin, and "AC2" intends the third cartridge 5 filled with the activated carbon.

[Table 1]

| No. | Identified Compound | | Cartridge Collection (C) | | | | | |
|---|---|---|---|---|---|---|---|---|
| | Name | CAS No. | HLB | | MC-1 | AC2 | | Condensed Water |
| | | | Methanol Fraction | Dichloromethane Fraction | 1% NH$_3$/methanol | Methanol Fraction | Dichloromethane Fraction | |
| 1 | 2-Aminoethanol | 141-43-5 | 636,675, 271 | 13,800,931 | 344,558, 452 | 0 | 0 | 0 |
| 2 | Morpholine | 110-91-8 | 261,382, 264 | 0 | 0 | 638,185, 976 | 0 | 144,068 ,473 |
| 3 | 2-(1-Aziridinyl)ethanol | 1072-52-2 | 648,250, 582 | 0 | 0 | 0 | 0 | 0 |
| 4 | N-Methylmorpholine | 109-02-4 | 201,683, 021 | 0 | 0 | 180,194, 855 | 26,315,07 7 | 0 |
| 5 | Diethanolamine | 111-42-2 | 18,449,1 49,851 | 106,023,44 4 | 0 | 3,843,00 7 | 0 | 0 |
| 6 | N-(2-Hydroxyethyl)glycine | 5835-28-9 | 13,201,0 01 | 0 | 0 | 0 | 0 | 0 |
| 7 | N,N-Bis(2-hydroxyethyl)formami de | 25209-66-9 | 727,998, 342 | 26,969,383 | 1,475,30 6 | 28,801,9 98 | 0 | 0 |
| 8 | 4-(2-Hydroxyethyl)-2-piperazinone | 23936-04-1 | 178,144, 999 | 0 | 0 | 0 | 13,406,58 6 | 0 |
| 9 | 1,3-Bis(2-hydroxyethyl)urea | 15438-70-7 | 180,817, 231 | 643,623 | 0 | 0 | 0 | 412,425 |
| 10 | Bicine | 150-25-4 | 11,761,7 84 | 0 | 0 | 0 | 0 | 0 |

[Table 2]

| N o. | Identified Compound | Impinger Collection (I) | | | | Total Value of Peak Area | | Peak Area Ratio |
|---|---|---|---|---|---|---|---|---|
| | | 0.1% Sulfamic Acid Solution | | Ultrapure Water | | C | I | C/I |
| | Name | Absorbin g Liquid | Impinger Washing Liquid | Absorbin g Liquid | Impinger Washing Liquid | | | |
| 1 | 2-Aminoethanol | 512,814,6 08 | 4,090,072 | 0 | 0 | 995,034,6 54 | 516,904,6 81 | 1.92 |
| 2 | Morpholine | 77,683,92 1 | 0 | 0 | 19,730,50 5 | 1,043,636 ,713 | 97,414,42 6 | 10.71 |
| 3 | 2-(1-Aziridinyl)ethanol | 514,794,1 38 | 0 | 0 | 0 | 648,250,5 82 | 514,794,1 38 | 1.26 |
| 4 | N-Methylmorpholine | 80,955,70 6 | 7,293,010 | 0 | 5,030,601 | 408,192,9 53 | 93,279,31 7 | 4.38 |
| 5 | Diethanolamine | 7,656,334 ,432 | 36,557,62 5 | 0 | 3,748,458 | 18,559,01 6,301 | 7,696,640 ,514 | 2.41 |
| 6 | N-(2-Hydroxyethyl)glycine | 4,546,182 | 0 | 0 | 0 | 13,201,00 1 | 4,546,182 | 2.90 |
| 7 | N,N-Bis(2-hydroxyethyl)formami de | 146,892,5 08 | 896,929 | 0 | 230,688 | 785,245,0 29 | 148,020,1 25 | 5.30 |
| 8 | 4-(2-Hydroxyethyl)-2-piperazinone | 24,872,32 2 | 0 | 0 | 0 | 191,551,5 85 | 24,872,32 2 | 7.70 |
| 9 | 1,3-Bis(2-hydroxyethyl)urea | 22,631,84 9 | 71,921 | 0 | 104,208 | 181,873,2 79 | 22,807,97 8 | 7.97 |
| 10 | Bicine | 9,566,946 | 0 | 0 | 0 | 11,761,78 4 | 9,566,946 | 1.23 |

EP 4 725 588 A1

15

[Table 3]

| No. | Identified Compound | | Cartridge Collection (C) | | | | | |
| | Name | CAS No. | HLB | | MC-1 | AC2 | | Conden sed Water |
| | | | Methanol Fraction | Dichlorom ethane Fraction | 1% NH$_3$/ methanol | Methan ol Fraction | Dichlorom ethane Fraction | |
|---|---|---|---|---|---|---|---|---|
| 11 | N-methyldiethanolamine | 105-59-9 | 81,413,2 68 | 0 | 0 | 2,953,08 9 | 0 | 11,024, 400 |
| 12 | N-(2-hydroxyethyl)oxazolidi ne-2-one | 3356-88-5 | 324,767, 036 | 7,061,730 | 0 | 0 | 0 | 0 |
| 13 | Triethanolamine | 102-71-6 | 0 | 0 | 0 | 0 | 0 | 0 |
| 14 | Oxazolidin-2-one | 497-25-6 | 771,950, 485 | 4,747,452 | 0 | 39,414,5 44 | 13,234,19 9 | 0 |
| 15 | N-(2-hydroxyethyl)imidazoli din-2-one | 3699-54-5 | 227,360, 542 | 0 | 0 | 21,388,9 52 | 4,201,509 | 0 |
| 16 | Glycine | 56-40-6 | 0 | 0 | 0 | 23,838,8 65 | 0 | 12,417, 131 |
| 17 | Oxamide | 471-46-5 | 0 | 0 | 28,724,9 16 | 883,788, 093 | 900,986,9 13 | 0 |
| 18 | N-(2-hydroxyethyl)foramide | 693-06-1 | 855,132, 457 | 5,269,409 | 113,037, 156 | 73,539,3 90 | 13,976,15 0 | 16,741, 355 |
| 19 | N-(2-hydroxyethyl)acetamide | 142-26-7 | 803,716, 295 | 10,949,66 2 | 271,403, 083 | 19,545,6 35 | 0 | 9,342,1 34 |
| 20 | N-(2-hydroxyethyl)imidazoli din-2-one | 1615-14-1 | 48,485,9 92 | 0 | 0 | 0 | 0 | 0 |

[Table 4]

| No. | Identified Compound | Impinger Collection (I) | | | | Total Value of Peak Area | | Peak Area Ratio |
|---|---|---|---|---|---|---|---|---|
| | Name | 0.1% Sulfamic Acid Solution | | Ultrapure Water | | C | I | C/I |
| | | Absorbin g Liquid | Impinger Washing Liquid | Absorbin g Liquid | Impinger Washing Liquid | | | |
| 11 | N-methyldiethanolamine | 87,111,6 12 | 0 | 0 | 0 | 95,390,75 6 | 87,111, 612 | 1.10 |
| 12 | N-(2-hydroxyethyl)oxazolidi ne-2-one | 175,305, 567 | 1,015,03 6 | 0 | 0 | 331,828,7 66 | 176,320 ,603 | 1.88 |
| 13 | Triethanolamine | 5,373,10 0 | 0 | 0 | 0 | 0 | 5,373,1 00 | only I detected |
| 14 | Oxazolidin-2-one | 783,301, 431 | 2,159,95 3 | 0 | 0 | 829,346,6 80 | 785,461 ,383 | 1.06 |
| 15 | N-(2-hydroxyethyl)imidazoli din-2-one | 57,980,2 81 | 402,893 | 0 | 0 | 252,951,0 03 | 58,383, 173 | 4.33 |
| 16 | Glycine | 0 | 1,100,01 2 | 6,500,01 6 | 4,096,28 6 | 36,255,99 5 | 11,696, 314 | 3.10 |
| 17 | Oxamide | 0 | 0 | 0 | 0 | 1,813,499 ,922 | 0 | only C detected |
| 18 | N-(2-hydroxyethyl)foramide | 364,711, 560 | 2,965,22 2 | 0 | 0 | 1,077,695 ,918 | 367,676 ,782 | 2.93 |
| 19 | N-(2-hydroxyethyl)acetamide | 105,330, 097 | 1,441,45 8 | 0 | 0 | 1,114,956 ,809 | 106,771 ,555 | 10.44 |
| 20 | N-(2-hydroxyethyl)imidazoli din-2-one | 0 | 0 | 0 | 0 | 48,485,99 2 | 0 | only C detected |

[Table 5]

| No. | Identified Compound | | Cartridge Collection (C) | | | | | |
|---|---|---|---|---|---|---|---|---|
| | Name | CAS No. | HLB | | MC-1 | AC2 | | Conden sed Water |
| | | | Methanol Fraction | Dichlorome thane Fraction | 1% NH$_3$/metha nol | Methano l Fraction | Dichlorom ethane Fraction | |
| 21 | 2-(Methylamino)eth anol | 109-83-1 | 1,259,689, 438 | 0 | 1,114,306,5 78 | 0 | 0 | 0 |
| 22 | Methylglycine | 107-97-1 | 0 | 0 | 0 | 13,322,7 75 | 0 | 0 |
| 23 | Pyrazine | 290-37-9 | 15,889,46 5 | 0 | 0 | 0 | 130,126,85 2 | 0 |
| 24 | 2-Methylpyrazine | 109-08-0 | 57,164,81 1 | 0 | 49,133,264 | 0 | 79,795,319 | 0 |
| 25 | 2,6-Dimethylpyrazine | 108-50-9 | 348,842,0 20 | 0 | 1,886,623 | 0 | 3,500,808 | 0 |
| 26 | Hexamethylenetet ramine | 100-97-0 | 26,682,17 9 | 0 | 61,492,714 | 73,025,8 73 | 79,249,697 | 8,842,0 17 |
| 27 | 1,3-Dimethylbutylam ine | 108-09-8 | 5,296,452, 841 | 609,125,51 2 | 0 | 0 | 0 | 0 |
| 28 | 1-(2-Hydroxyethyl)ure a | 2078-71-9 | 164,465,1 77 | 0 | 220,907 | 126,095, 009 | 0 | 0 |
| 29 | N-Nitrosodibutylam ine | 924-16-3 | 780,160,7 31 | 1,339,225 | 0 | 0 | 0 | 0 |
| 30 | N-Nitrosodiethanola mine | 1116-54-7 | 28,733,26 0 | 0 | 0 | 0 | 0 | 0 |

EP 4 725 588 A1

[Table 6]

| No. | Identified Compound | Impinger Collection (I) | | | | Total Value of Peak Area | | Peak Area Ratio |
|---|---|---|---|---|---|---|---|---|
| | Name | 0.1% Sulfamic Acid Solution | | Ultrapure Water | | C | I | C/I |
| | | Absorbin g Liquid | Impinger Washing Liquid | Absorbin g Liquid | Impinger Washing Liquid | | | |
| 21 | 2-(Methylamino)eth anol | 8,134,570 ,759 | 0 | 0 | 0 | 2,373,996, 016 | 8,134,570, 759 | 0.29 |
| 22 | Methylglycine | 0 | 0 | 0 | 0 | 13,322,77 5 | 0 | only C detected |
| 23 | Pyrazine | 259,554,7 88 | 0 | 2,851,604 | 0 | 146,016,3 17 | 262,406,39 2 | 0.56 |
| 24 | 2-Methylpyrazine | 270,393,6 87 | 0 | 6,468,701 | 0 | 186,093,3 94 | 276,862,38 9 | 0.67 |
| 25 | 2,6-Dimethylpyrazine | 248,041,8 25 | 0 | 2,137,719 | 0 | 354,229,4 51 | 250,179,54 4 | 1.42 |
| 26 | Hexamethylenetet ramine | 1,151,045 ,101 | 0 | 0 | 0 | 249,292,4 79 | 1,151,045, 101 | 0.22 |
| 27 | 1,3-Dimethylbutylam ine | 19,688,48 8,389 | 38,893,06 7 | 0 | 0 | 5,905,578, 352 | 19,727,381 ,455 | 0.30 |
| 28 | 1-(2-Hydroxyethyl)ure a | 23,888,34 0 | 0 | 1,243,558 | 0 | 290,781,0 92 | 25,131,899 | 11.57 |
| 29 | N-Nitrosodibutylam ine | 6,763,378 | 0 | 1,240,083 | 0 | 781,499,9 56 | 8,003,461 | 97.65 |
| 30 | N-Nitrosodiethanola mine | 0 | 0 | 0 | 0 | 28,733,26 0 | 0 | only C detected |

(Discussion of Detected and Identified Nitrosamine)

As shown in Tables 1 to 6, in addition to the diethanolamine actually supported on the solid absorbent, various components were detected in the gases from the three gas discharge ports of the carbon-dioxide separation/recovery equipment. As shown in Tables 5 and 6, N-nitrosodibutylamine (No. 29) and NDEA (No. 30) as nitrosamines were also included in the detected components. From this detection result, it has been determined that when the discharge gas containing NOx is supplied to the carbon-dioxide separation/recovery equipment in which the solid absorbent is used, the amine supported on the solid absorbent reacts with NOx, thereby causing the gas discharged from the gas discharge port to include nitrosamines. Thus, in the case of treating general discharge gas with a NOx concentration in excess of 100 ppm in accordance with the carbon-dioxide separation/recovery process in which the solid absorbent is used, these generated nitrosamines may diffuse to the ground and contaminate the surrounding environment.

Regarding the diethanolamine actually supported on the solid absorbent, it has been reported that the nitroso compound in the aqueous diethanolamine solution is mainly NDEA (No. 30) (P. Prado, Master Thesis, University of Regina, 2021). Furthermore, the generation mechanism of the nitrosation has also been revealed. However, as shown in Table 6, the main component of the nitrosated product in the present detection result is N-nitrosodibutylamine (No. 29). Specifically, the detected concentration of N-nitrosodibutylamine (No. 29) was about 30 times as high as the detected concentration of NDEA (No. 30), which was a main nitrosated product of diethanolamine. Specifically, as shown in Table 6, in the result of the cartridge collection, the detected concentration of N-nitrosodibutylamine (No. 29) was 781,499,956, and the detected concentration of NDEA was 28,733,260. Further, in the result of the impinger collection, the detected concentration of NDEA was 0. Accordingly, the nitrosation mechanism in the present detection result is an unclear mechanism that fails to be predicted at all from the prior art. Also from this result of discussion, it is obvious that the generation of nitrosamine in the carbon-dioxide separation/recovery process in which the solid absorbent is used is not obvious from the simple generation mechanism of nitrosamine in the carbon-dioxide separation/recovery process with the use of the amine absorbing liquid method.

2. Calculation of Upper Limit of NOx in Gas to be Treated, Supplied to Carbon-Dioxide Separation/Recovery Equipment for Reducing Amount of Nitrosamine Diffused to Ground, down to Small Amount

The upper limit of the NOx concentration in the gas to be treated, at which the amount of nitrosamine diffused to the ground is capable of being reduced down to a small amount (specifically, the amount at which the maximum landing concentration of nitrosamine is 1 $\mu$g/m$^3$ or less), was calculated by the following method in an approximate average regular repair period of the carbon-dioxide separation/recovery equipment (specifically, about 1 year (about 8000 hours as the operation period)).

(Outline of Method for Calculating Upper Limit of NOx Concentration)

No nitrosamine is included in the solid absorbent in the carbon-dioxide separation/recovery equipment immediately after the start of use. The discharge gas containing NOx is supplied to the carbon-dioxide separation/recovery equipment, thereby causing the NOx to react with the diethanolamine, and causing nitrosamine to be gradually accumulated in the equipment. As the accumulated concentration of nitrosamine is increased, the volatilized concentration of nitrosamine is also increased. In the present calculation method, the NOx concentration in the discharge gas that is supplied to the carbon-dioxide separation/recovery equipment is determined for preventing the maximum landing concentration of nitrosamine (more specifically, NDEA) from exceeding the regulation value until 8000 hours from the start of the operation, when the discharge gas from the discharge line (chimney, flue, or the like) of the carbon-dioxide separation/recovery equipment diffuses to the atmosphere. The method for calculating the upper limit of the NOx concentration includes the following three calculation steps:

    1) a step of calculating the correlation between the concentration of NOx that is supplied to the solid absorbent of the carbon-dioxide separation/recovery equipment and the discharge concentration of nitrosamine in the discharge gas;
    2) a step of calculating the dilution ratio of the discharge gas diffused into the atmosphere; and
    3) a step of calculating the concentration of NOx in the discharge gas for preventing the maximum landing concentration of nitrosamine (more specifically, NDEA) from exceeding the regulation value until 8000 hours.

1) Step of Calculating Correlation between Concentration of NOx Supplied to Solid Absorbent of Carbon-Dioxide Separation/Recovery Equipment and Discharge Concentration of Nitrosamine in Discharge Gas

The relationship between the supply rate (flow rate) of NOx that is supplied to the solid absorbent of the carbon-dioxide separation/recovery equipment and the concentration of NOx that is supplied thereto can be expressed by the

following formula:

$$\text{formula: (supply rate of NOx)} = \text{(flow rate of discharge gas)} \times \text{(concentration of NOx)}$$

How the discharge concentration of nitrosamine from the discharge line (chimney, flue, or the like) of carbon-dioxide separation/recovery equipment varies with the lapse of time including at least 8000 hours from the start of operation was calculated, in the case of changing the NOx concentration (the concentration of NOx supplied to the solid absorbent of the carbon-dioxide separation/recovery equipment) in the formula mentioned above.

The flow rate of the discharge gas in the formula mentioned above can be determined by the concentration of carbon dioxide in the discharge gas supplied to the carbon-dioxide separation/recovery equipment, the target recovery rate of carbon dioxide, and the performance of the solid absorbent. In calculating the correlation between the concentration of NOx and the discharge concentration of nitrosamine, numerical values were set as follows as conditions of the carbon-dioxide separation/recovery equipment for discharge gas of general coal combustion.

· concentration of carbon dioxide in discharge gas: 15%
· recovery rate of carbon dioxide: 90%

Furthermore, the performance of the solid absorbent for use in the carbon-dioxide separation/recovery equipment was set as follows, based on representative documents related to a solid absorbent such as diethanolamine.

· type of amine supported on solid absorbent: diethanolamine
· amount of amine supported in solid absorbent: 36wt% (see Micropor. Mesopor. Mater. 226, p444-453 (2016))
· amount of carbon dioxide absorbed: 2.85wt% (see Micropor. Mesopor. Mater. 226, p444-453 (2016))
· time of absorbing carbon dioxide: 30 minutes (set in consideration of 22 minutes in Micropor. Mesopor. Mater. 226, p444-453 (2016))
· time of regenerating solid absorbent: 2.5 hours (set after calculating the ratio (6 times) of the time for absorption and desorption, from Micropor. Mesopor. Mater. 62, p29-45 (2003))
· bulk density of base: 400 kg/m$^3$ (see the catalog value on the spherical silica gel manufactured by KANTO CHEMICAL CO., INC.)
· bulk density of absorbent: 625 kg/m$^3$ (calculated from the bulk density of the base and the amount of amine supported)

Further, examples of such a carbon-dioxide separation/recovery equipment as described above, in which: the time of absorbing carbon dioxide is 30 minutes; and the time of regenerating the solid absorbent is 2.5 hours include such carbon-dioxide separation/recovery equipment as shown in FIG. 3, in which the number of tanks (or towers) is 5, and while the discharge gas is supplied to any one of the tanks (or towers) of the carbon-dioxide separation/recovery equipment, the regenerating step and drying step for the solid absorbent are performed in the remaining four tanks (or towers).

From the numerical values mentioned above, the amount of carbon dioxide absorbed per volume of the solid absorbent in the carbon-dioxide separation/recovery equipment can be calculated as follows:

$$\text{(bulk density of absorbent)} \times \text{(amount of carbon dioxide absorbed)} = 0.405 \text{ kmol/m}^3$$

Furthermore, the above-mentioned amount of carbon dioxide per volume is absorbed for 30 minutes, and the absorption rate of carbon dioxide is thus 0.81 kmol/(m$^3$·h). Accordingly, the flow rate of the discharge gas can be calculated as follows:

0.81 kmol/(m$^3$·h)/((recovery rate of carbon dioxide) × (concentration of carbon dioxide in discharge gas)) = 134 Nm$^3$/(h·m$^3$)

Next, the progress of nitrosation and the state of volatilization in the solid absorbent of the carbon-dioxide separation/recovery equipment were estimated for examining the status of nitrosamine discharge from the discharge line (chimney, flue, or the like) of the carbon-dioxide separation/recovery equipment in more detail.

First, the following conditions were assumed for the calculation.

i) The total amount of NOx in the discharge gas supplied to the solid absorbent of the carbon-dioxide separation/recovery equipment is absorbed by the solid absorbent.

ii) The NOx is uniformly absorbed by all of the solid absorbent included in the carbon-dioxide separation/recovery equipment.
iii) The NOx reacts with diethanolamine to form NDEA. More specifically, no other absorption reactions are caused, such as a reaction of the NOx with water, thereby resulting in generation of a nitric acid or a nitrous acid, and a neutralization reaction of the acid with the diethanolamine, followed by forming a salt, for example.
iv) Other deterioration mechanisms of diethanolamine such as oxidation and urea formation are not considered.

In accordance with the conditions mentioned above, a specific amount of diethanolamine is supported with a purity of 100% on the solid absorbent of the carbon-dioxide separation/recovery equipment immediately after the start of use. However, over time, the amount of diethanolamine is decreased due to volatilization, and the amount of diethanolamine supported is also decreased due to nitrosation (that is, nitrosamine generation) by a reaction with the NOx in the discharge gas.
The behaviors of volatilization and nitrosation were simulated in accordance with the following procedure.

i) The vapor pressure for each of the compounds in a mixture of diethanolamine supported on the solid absorbent and nitrosamine was calculated on the basis of Raoult's law. It is to be noted that the result of calculating the vapor pressure was used in ii) and the subsequent calculations, because the amount of volatilization depends on the vapor pressure.
ii) The amounts of diethanolamine and nitrosamine volatilized and the amount of diethanolamine converted to nitrosamine during a minute period of time $\Delta t$ were calculated.
iii) The amount of diethanolamine supported (kmol/m$^3$) at time t + $\Delta t$ was calculated by subtracting the amount of diethanolamine volatilized and the amount of diethanolamine converted to nitrosamine from the amount of diethanolamine supported at time t. In addition, the amount (kmol/m$^3$) of nitrosamine supported at the time t + $\Delta t$ was calculated by adding the amount of diethanolamine converted to nitrosamine, and subtracting the amount of nitrosamine volatilized, from the amount of nitrosamine supported at the time t.
iv) The behaviors of volatilization and nitrosation related to diethanolamine and nitrosamine over time were predicted by repeating ii) to iv) from time t = 0.

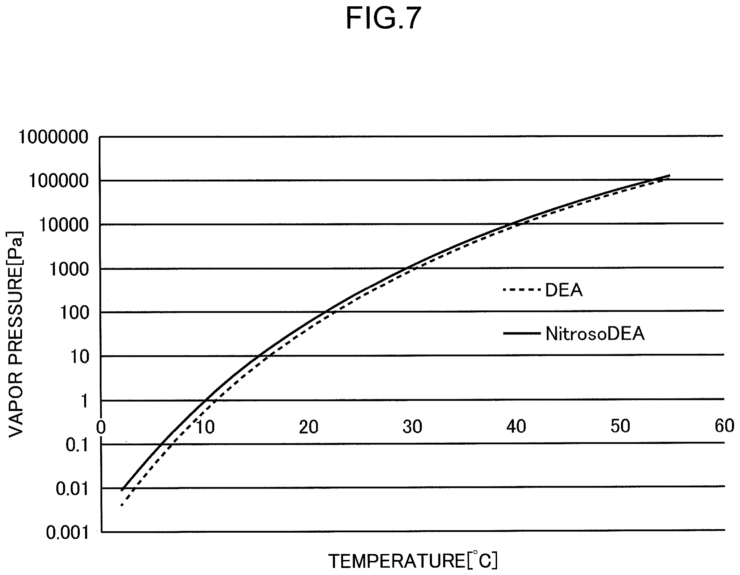

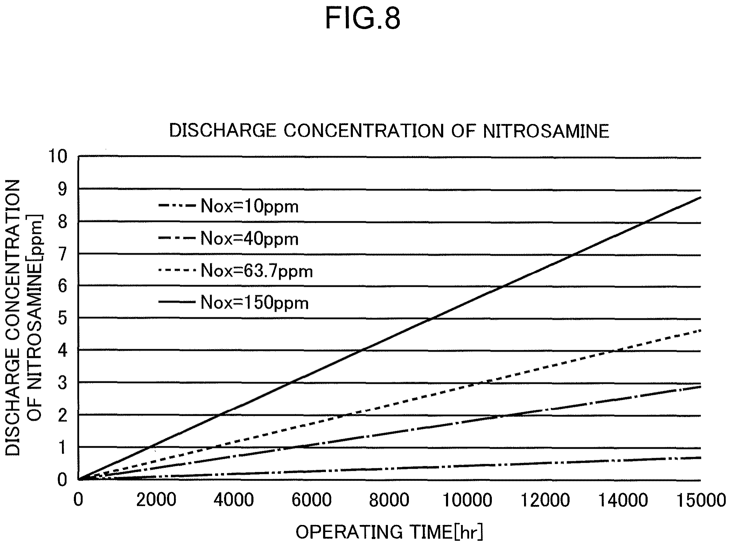

Further, in the calculation, the outlet gas temperature in the absorbing step was set to 45°C. The vapor pressure of diethanolamine was calculated with the use of the Antoine parameters described in Klepacova et al., J. Chem. Eng. Data 2011, 56, p2242 to 248. The vapor pressure of nitrosamine (specifically, NDEA) was calculated by determining the Antoine parameters for reproducing the estimates at 0°C, 20°C, and 40°C described in R.G. Klein, Toxiclogy, 23, p135-147 (1982), in accordance with fitting by the least squares method. FIG. 7 shows vapor pressure curves of diethanolamine and NDEA according to an example.
Thus, the discharge concentration of nitrosamine over time in the case of varying the NOx concentration was calculated, with the use of the vapor pressure of NDEA shown in FIG. 7 and based on the predicted behaviors of volatilization and nitrosation over time. FIG. 8 shows a graph of a discharge concentration of nitrosamine in the case of setting the NOx concentration to 10 ppm, 40 ppm, 63.7 ppm, or 150 ppm.

2) Step of Calculating Dilution Ratio of Discharge Gas Diffused into Atmosphere

The discharge gas discharged from the discharge line (chimney, flue, or the like) of the carbon-dioxide separation/recovery equipment reaches the ground after being diffused into the atmosphere. The dilution ratio of the discharge gas at the time can be estimated from a model equation of atmospheric diffusion.
In this example, calculation was performed with a common coal-fired power plant as a model case. First, the amount of discharge gas was set to 2,210,000 Nm$^3$/h on a wet basis and set to 1,980,000 m$^3$/h on a dry basis, and the gas temperature was set to 90°C. The chimney height was set to 230 m. The atmospheric stability was set to B, that is, the conditions of daytime, fine weather, and average wind speed. The effective chimney height determined by the CONCAWE equation was 463.9 m. Then, the dilution ratio was estimated with the plume equation. As a result, the place showing the maximum landing concentration was estimated to be a point of 2876 m from the chimney, and the dilution ratio at the place was estimated to be $7.29 \times 10^{-5}$. In this regard, as diffusion parameters, the evaluation time was set to 60 minutes, the P-G diagram evaluation time was set to 3 minutes, and the exponent of the horizontal diffusion width was set to 0.2.
Further, similarly to the foregoing, the maximum landing concentration was also estimated with the use of the weak wind puff equation under a weak wind condition, the puff equation under a no wind condition, and the like. However, because of the largest maximum landing concentration estimated with the plume equation, the evaluation result in accordance with the plume equation was used for the examination for more strictly examining the risk due to the diffusion of nitrosamine to the ground.

3) Step of Calculating Concentration of NOx in Discharge Gas for Preventing Maximum Landing Concentration of Nitrosamine (More Specifically, NDEA) from Exceeding Regulation Value until 8000 hours

According to German law (TRGS552), the upper limit is 1 $\mu$g/m$^3$ on the exposure concentration of nitrosamine in the work environment. Accordingly, the same numerical value was also set as the regulation value in the present example. The concentration of 1 $\mu$g/m$^3$ is 0.167ppb in molar composition of NDEA, in calculation from the molecular weight 134.1 (g/mol) of NDEA. When this numerical value is divided by the dilution ratio of $7.29 \times 10^{-5}$ calculated in 2) described above, the result is 2.29 ppm. In other words, the upper limit value of the discharge concentration of nitrosamine in the discharge gas discharged from the discharge line (chimney, flue, or the like) of the carbon-dioxide separation/recovery equipment, corresponding to the regulation value of the concentration on the ground, can be set to 2.29 ppm. Furthermore, based on the graph of the discharge concentration of nitrosamine in the case of varying the NOx concentration determined in 1) described above, it can be confirmed that the concentration of NOx in the discharge gas, for keeping from exceeding the upper limit 2.29 ppm of the discharge concentration of nitrosamine in the discharge gas until 8000 hours is 63.7 ppm or less.

From the foregoing, it is determined that when a diethanolamine-based material is used as an amine that is supported on the solid absorbent, the concentration of NOx in the discharge gas needs to be reduced down to approximately 63.7 ppm for reducing the amount of nitrosamine diffused to the ground to a small amount in 8000 hours, which is an approximate average regular repair period of the carbon-dioxide separation/recovery equipment.

The present application is based on Japanese Patent Application No. 2023-110830 filed on July 5, 2023, the contents of which are incorporated in the present application.

It should be understood that the embodiments and examples disclosed herein are illustrative in all respects, and not restrictive. The scope of the present invention is specified not by the foregoing description but by the claims, and is intended to include all modifications within the meaning and scope equivalent to the claims.

**Reference Signs**

| 10, 20 | acidic-gas separation/recovery system |
| 10A, 20A | combustion equipment |
| 1 | NOx removal equipment |
| 2 | carbon-dioxide separation/recovery equipment |
| 3 | first cartridge |
| 4 | second cartridge |
| 5 | third cartridge |
| 6 | first impinger |
| 7 | second impinger |
| L0 | discharge gas supply line |
| L1 | supply line for gas to be treated |
| L2 | discharge line for carbon-dioxide-free discharge gas |
| L3 | vapor supply line |
| L4 | carbon dioxide discharge line |
| L5 | dry air supply line |
| L6 | moisture-containing air discharge line |

**Claims**

1. An acidic-gas separation/recovery system comprising:

   NOx removal equipment that removes NOx in a discharge gas; and
   carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base, wherein an NOx concentration in the gas to be treated that is supplied from the NOx removal equipment to the carbon-dioxide separation/recovery equipment is 63.7 ppm or less.

2. The acidic-gas separation/recovery system according to claim 1, wherein the NOx removal equipment removes NOx in the discharge gas by using a solid absorbent in which an amine is supported on a porous base.

3. The acidic-gas separation/recovery system according to claim 2, wherein the solid absorbent for use in the NOx removal equipment includes the solid absorbent used for adsorbing and desorbing carbon dioxide in the carbon-dioxide separation/recovery equipment.

4. An acidic-gas separation/recovery method comprising:

   removing NOx in a discharge gas; and
   adsorbing and desorbing carbon dioxide contained in a gas to be treated after the NOx removal by using a solid absorbent in which an amine is supported on a porous base, thereby separating and recovering the carbon dioxide,
   wherein an NOx concentration in the gas to be treated after the NOx removal is 63.7 ppm or less.

5. The acidic-gas separation/recovery method according to claim 4, wherein in the removal of NOx, NOx in the discharge gas is removed by using a solid absorbent in which an amine is supported on a porous base.

6. The acidic-gas separation/recovery method according to claim 5, wherein the solid absorbent for use in the removal of NOx includes the solid absorbent used for adsorbing and desorbing carbon dioxide in separating and recovering the carbon dioxide.

7. An acidic-gas separation/recovery system comprising:

   NOx removal equipment that removes NOx in a discharge gas; and
   carbon-dioxide separation/recovery equipment that is installed downstream along a gas flow from the NOx removal equipment, and adsorbs and desorbs carbon dioxide contained in a gas to be treated that is supplied from the NOx removal equipment, by using a solid absorbent in which an amine is supported on a porous base,
   wherein an NOx concentration in the gas to be treated that is supplied from the NOx removal equipment to the carbon-dioxide separation/recovery equipment is set to equal to or less than a concentration capable of maintaining a value at which a maximum landing concentration of nitrosamine after diffusion of the discharge gas discharged from the carbon-dioxide separation/recovery equipment is equal to or less than a preset regulation value.

8. The acidic-gas separation/recovery system according to claim 7, wherein the NOx concentration in the gas to be treated is set to equal to or less than a concentration at which the maximum landing concentration of nitrosamine after diffusion of the discharge gas can be maintained at 1 $\mu$g/m$^3$ or less until an operating time of the carbon-dioxide separation/recovery equipment reaches 8000 hours.

9. An acidic-gas separation/recovery method comprising:

   removing NOx in a discharge gas; and
   adsorbing and desorbing carbon dioxide contained in a gas to be treated after the NOx removal by using a solid absorbent in which an amine is supported on a porous base, thereby separating and recovering the carbon dioxide,
   wherein an NOx concentration in the gas to be treated after the NOx removal is set to equal to or less than a concentration capable of maintaining a value at which a maximum landing concentration of nitrosamine after diffusion of the discharge gas discharged from the separation and recovery of the carbon dioxide is equal to or less than a preset regulation value.

10. The acidic-gas separation/recovery method according to claim 9, wherein the NOx concentration in the gas to be treated is set to equal to or less than a concentration at which the maximum landing concentration of nitrosamine after diffusion of the discharge gas can be maintained at 1 $\mu$g/m$^3$ or less until a total time for separating and recovering carbon dioxide reaches 8000 hours.

# FIG.1

EP 4 725 588 A1

# FIG.2

SUPPLY LINE FOR GAS TO BE TREATED L1

VAPOR SUPPLY LINE L3

DRY AIR SUPPLY LINE L5

ADSORPTION TOWER

REGENERATION TOWER

DRYING TOWER

DISCHARGE LINE FOR CARBON-DIOXIDE-FREE DISCHARGE GAS L2

CARBON DIOXIDE DISCHARGE LINE L4

MOISTURE-CONTAINING AIR DISCHARGE LINE L6

EP 4 725 588 A1

# FIG.3

DISCHARGE LINE FOR CARBON-DIOXIDE-FREE DISCHARGE GAS L2

CARBON DIOXIDE DISCHARGE LINE L4

MOISTURE-CONTAINING AIR DISCHARGE LINE L6

SUPPLY LINE FOR GAS TO BE TREATED L1

VAPOR SUPPLY LINE L3

DRY AIR SUPPLY LINE L5

EP 4 725 588 A1

# FIG.4

EP 4 725 588 A1

FIG.5

# FIG.6

# FIG.7

EP 4 725 588 A1

# FIG.8

DISCHARGE CONCENTRATION OF NITROSAMINE

EP 4 725 588 A1

## INTERNATIONAL SEARCH REPORT

| International application No. |
|---|
| **PCT/JP2024/024103** |

### A. CLASSIFICATION OF SUBJECT MATTER

*B01D 53/56*(2006.01)i; *B01D 53/14*(2006.01)i; *B01D 53/62*(2006.01)i; *B01D 53/82*(2006.01)i
FI: B01D53/56 ZAB; B01D53/62; B01D53/82; B01D53/14 100

According to International Patent Classification (IPC) or to both national classification and IPC

### B. FIELDS SEARCHED

Minimum documentation searched (classification system followed by classification symbols)

B01D53/56; B01D53/14; B01D53/62; B01D53/82

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-202523 A (KABUSHIKI KAISHA TOSHIBA) 07 October 2013 (2013-10-07)<br>claims, paragraphs [0006]-[0010], [0063]-[0064], fig. 1-4 | 1-10 |
| Y | JP 8-168638 A (KANSAI ELECTRIC POWER CO.) 02 July 1996 (1996-07-02)<br>claims, paragraphs [0002]-[0006] | 1-10 |
| Y | WO 2011/013332 A1 (KAWASAKI JUKOGYO KABUSHIKI KAISHA) 03 February 2011<br>(2011-02-03)<br>claims, paragraphs [0008]-[0009] | 1-10 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

33

## INTERNATIONAL SEARCH REPORT
### Information on patent family members

International application No.

**PCT/JP2024/024103**

| Patent document cited in search report | | | Publication date (day/month/year) | Patent family member(s) | Publication date (day/month/year) |
|---|---|---|---|---|---|
| JP | 2013-202523 | A | 07 October 2013 | (Family: none) | |
| JP | 8-168638 | A | 02 July 1996 | US 5648053 A<br>claims, column 2, lines 8-20<br>EP 716875 A1 | |
| WO | 2011/013332 | A1 | 03 February 2011 | US 2012/0160099 A1<br>claims, paragraphs [0013]-[0014] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013121562 A
- JP 6055134 B
- JP 2023110830 A

**Non-patent literature cited in the description**

- **AOYAMA MITSUNORI**. N-nitrosamine (regulation by TRGS 552 and response thereto). *Journal of Japan Rubber Association*, 2010, vol. 83 (8), 25-28
- **P. PRADO**. *Master Thesis*, 2021
- *Micropor. Mesopor. Mater.*, 2016, vol. 226, 444-453
- *Micropor. Mesopor. Mater.*, 2003, vol. 62, 29-45
- **KLEPACOVA et al.** *Chem. Eng. Data*, 2011, vol. 56, 2242-248
- **R.G. KLEIN**. *Toxiclogy*, 1982, vol. 23, 135-147